# EUROPEAN PATENT APPLICATION

(11) **EP 4 571 985 A1**
(43) Date of publication of application: **18.06.2025**
(21) Application number: 22955478.7
(22) Date of filing: 23.09.2022
(51) Int. Cl.: H01M 50/30

(54) **BATTERY AND ELECTRIC DEVICE**

(30) Priority: 17.08.2022 WO PCT/CN2022/113154
(71) Applicant: Contemporary Amperex Technology Co., Limited, Ningde, Fujian 352100 (CN)
(72) Inventor: ZHANG, Chenchen, Ningde, Fujian 352100 (CN); LI, Xing, Ningde, Fujian 352100 (CN); TANG, Yu, Ningde, Fujian 352100 (CN); XU, Chenyi, Ningde, Fujian 352100 (CN)
(74) Representative: Ziebig Hengelhaupt Intellectual Property Attorneys Patentanwaltskanzlei PartGmbB
(86) International application number: PCT/CN2022/121055
(87) International publication number: WO 2024/036703

(57) **Abstract**

A battery, and electrical device are provided, which relate to the technical field of battery. The battery includes a first battery cell and the second battery cell, wherein the first battery cell is provided with a first surface, and the first battery cell has a first pressure relief mechanism arranged on the first surface. The second battery cell is provided with a second surface, and the second battery cell has a second pressure relief mechanism arranged on the second surface. The first surface and the second surface are arranged opposite to each other along a first direction, and the first pressure relief mechanism and the second pressure relief mechanism are staggered along the first direction. In the battery, the first pressure relief mechanism of the first battery cell and the second pressure relief mechanism of the second battery cell arranged relatively are staggered, so as to prevent the case that one of the two battery cells arranged relatively releases pressure by a pressure relief mechanism after occurring thermal runaway so that high-temperature emissions are sprayed onto the other battery cell arranged opposite thereto, thus alleviating or eliminating a thermal spread of the whole pack caused by the thermal runaway of the battery cell, and reducing a risk of safety failure of the battery.

## Description

### Cross-reference to Related Applications

The present disclosure claims priority to International Patent Application No. PCT/CN2022/113154, filed with the Chinese Patent Office on August 17, 2022, entitled "Battery, and Electrical Device," the whole contents of which are incorporated herein by reference.

### Technical Field

The present disclosure relates to the technical field of battery, and specifically relates to a battery, and an electrical device.

### Background Art

During the process of using a battery, when a battery cell in the battery occurs a thermal runaway, the battery cell with thermal runaway will quickly affect other battery cells without thermal runaway, thereby resulting in a thermal spread of a whole pack, so that the whole battery is in a dangerous state.

### Summary

In view of the above problem, the present disclosure provides a battery, and electrical device, which can solve the technical problem of thermal diffusion between battery cells.

In a first aspect, the present disclosure provides a battery, including: a first battery cell and the second battery cell, wherein the first battery cell is provided with a first surface, and the first battery cell has a first pressure relief mechanism arranged on the first surface; and the second battery cell is provided with a second surface, and the second battery cell has a second pressure relief mechanism arranged on the second surface, wherein the first surface and the second surface are arranged opposite to each other along a first direction, and the first pressure relief mechanism and the second pressure relief mechanism are staggered along the first direction.

In the technical solution of an embodiment of the present disclosure, in the battery of the present disclosure, the first pressure relief mechanism of the first battery cell and the second pressure relief mechanism of the second battery cell arranged oppositely are staggered, so as to prevent the situation that one of the two battery cells arranged oppositely releases pressure by a pressure relief mechanism after occurring thermal runaway, so that high-temperature emissions are sprayed onto the other battery cell arranged oppositely, thus alleviating or eliminating a thermal spread of the whole pack caused by the thermal runaway of the battery cell, and reducing a risk of safety failure of the battery.

In some embodiments, the first surface and the second surface are arranged directly facing each other along the first direction. The first surface and the second surface are arranged directly facing each other along the first direction, so that the first battery cell and the second battery cell can be neatly arranged in the battery box body, thereby improving a space utilization of the battery, and further improving the energy density of the battery.

In some embodiments, the first pressure relief mechanism is located at an edge of the first surface, and the second pressure relief mechanism is located at a middle or edge of the second surface. When the first pressure relief mechanism is located at the edge of the first surface, and the second pressure relief mechanism is located at the middle or edge of the second surface, the first pressure relief mechanism and the second pressure relief mechanism can be staggered along the first direction, so as to prevent the emissions from battery cell after thermal runaway from spraying onto the other battery cell arranged oppositely, thereby alleviating the thermal spread of the whole pack, and improving the safety performance of the battery.

In some embodiments, a center line is formed by connecting a center of the first surface to a center of the second surface. The first pressure relief mechanism and the second pressure relief mechanism are arranged at different sides of the center line along a second direction, wherein the second direction is perpendicular to the first direction. The first pressure relief mechanism and the second pressure relief mechanism located at different sides of the center line are staggered, so as to prevent the emissions from the battery cell after thermal runaway from spraying onto the other battery cell arranged oppositely, thereby alleviating the thermal spread of the whole pack, and improving the safety performance of the battery.

In some embodiments, the first surface and the second surface are staggered along the first direction. The first surface and the second surface are staggered in the first direction, so that the first pressure relief mechanism and the second pressure relief mechanism can be staggered along the first direction, so as to prevent the emissions from the battery cell after thermal runaway from spraying onto the other battery cell arranged oppositely, thereby alleviating the thermal spread of the whole pack, and improving the safety performance of the battery.

In some embodiments, the first pressure relief mechanism and the second pressure relief mechanism are separately located at the middle of the first surface and the middle of the second surface along the third direction, wherein the third direction is perpendicular to the first direction. In case that the first surface and the second surface are staggered along the first direction, the first pressure relief mechanism and the second pressure relief mechanism respectively located at the middle of the first surface and the middle of the second surface along the third direction are staggered, so as to prevent the emissions from the battery cell after thermal runaway from spraying onto the other battery cell arranged oppositely, thereby alleviating the thermal spread of the whole pack, and improving the safety performance of the battery. Moreover, during the process of installing the battery cells, even if certain wrong installation method exists, e.g., even if installation positions corresponding to the first battery cell and the second battery cell are wrong, the first pressure relief mechanism and the second pressure relief mechanism still can keep staggered.

In some embodiments, the first battery cell includes a first middle line parallel to the first direction, wherein the first middle line passes through the center of the first surface; and the second battery cell includes a second middle line parallel to the first direction, wherein the second middle line passes through the center of the second surface. Along the third direction, the first pressure relief mechanism is located at one side of the first middle line close to the second middle line and the second pressure relief mechanism is located at one side of the second middle line away from the first middle line, wherein the third direction is perpendicular to the first direction. In case that the first surface and the second surface are staggered along the first direction, the first pressure relief mechanism located at one side of the first middle line close to the second middle line and the second pressure relief mechanism located at one side of the second middle line away from the first middle line are staggered, so as to prevent the emissions from the battery cell after thermal runaway from spraying onto the other battery cell arranged oppositely, thereby alleviating the thermal spread of the whole pack, and improving the safety performance of the battery.

In some embodiments, the battery further includes a venting mechanism, wherein the venting mechanism is arranged between the first battery cell and the second battery cell, and the venting mechanism has the first pressure relief part and the second pressure relief part, wherein the first pressure relief part is configured to receive emissions discharged by the first battery cell via the first pressure relief mechanism, and the second pressure relief part is configured to receive emissions discharged by the second battery cell via the second pressure relief mechanism. The first pressure relief part and the second pressure relief part of the venting mechanism both are configured to provide a pressure relief path for the pressure relief mechanism of the battery cell, so that the battery cell can release pressure according to a preset path.

In some embodiments, the first pressure relief part and the second pressure relief part are staggered along the first direction. The first pressure relief part and the second pressure relief part are staggered along the first direction, which can prevent the emissions from the battery cell after thermal runaway from spraying onto the other battery cell arranged oppositely, thereby alleviating the thermal spread of the whole pack, and improving the safety performance of the battery.

In some embodiments, the venting mechanism further includes a blocking member, wherein the first pressure relief part and the second pressure relief part are arranged directly facing each other along the first direction, and the blocking member is arranged between the first pressure relief part and the second pressure relief part. The blocking member can prevent the high-temperature emissions of the battery cell after thermal runaway from spaying onto the other battery cell arranged oppositely, thus alleviating or eliminating the thermal spread of the whole pack caused by the thermal runaway of the battery cell, and reducing the risk of safety failure of the battery.

In some embodiments, the first pressure relief part is configured as at least one of a through hole or a weak structure, and/or, the second pressure relief part is configured as at least one of a through hole or a weak structure. When the first pressure relief part and/or the second pressure relief part are a through hole, the emissions of the battery cell can be released by the through hole; and when the first pressure relief part and/or the second pressure relief part are the weak structure, the emissions of the battery cell can be released by breaking through the weak structure when producing a preset pressure.

In some embodiments, flow channels are integrated into the venting mechanism, wherein the flow channels are configured to accommodate a thermal transfer medium. The thermal transfer medium can absorb the heat of the high-temperature emissions discharged by the battery cells after thermal runaway, thereby reducing the temperature of the whole battery, and improving the safety of the battery.

In some embodiments, the venting mechanism further includes a heat exchange part, wherein the flow channels are arranged in the heat exchange part. The heat exchange part is configured to exchange heat with the high-temperature emissions discharged by battery cells after thermal runaway, thereby reducing the temperature of the whole battery, and improving the safety of the battery.

In some embodiments, a liquid inlet and a liquid outlet are separately arranged at two ends of the venting mechanism, wherein the liquid inlet and the liquid outlet are separately communicated with the flow channels. The thermal transfer medium in the flow channels is a flowing thermal transfer medium, which can better balance the temperature of the whole battery.

In some embodiments, the battery includes a plurality of first battery cell groups and a plurality of second battery cell groups extending along a fourth direction, wherein the fourth direction is perpendicular to the first direction. The first battery cell group includes a plurality of first battery cells and the second battery cell group includes a plurality of second battery cells, and the plurality of first battery cell groups and the plurality of second battery cell groups are distributed alternately along the first direction. The plurality of battery cells of the battery are arranged neatly, which can ensure the whole structure strength of the battery and improve the energy density of the battery.

In some embodiments, the battery further includes a venting mechanism, wherein the venting mechanism is arranged between a first battery cell group and at least one of the second battery cell groups adjacent thereto, and the venting mechanism has the first pressure relief part and the second pressure relief part separately corresponding to the first pressure relief mechanism and the second pressure relief mechanism. The first pressure relief part and the second pressure relief part of the venting mechanism both are configured to provide the pressure relief path for the pressure relief mechanism of the battery cell, so that the battery cell can release pressure according to the preset path.

In some embodiments, the first battery cell group and the second battery cell group are distributed in multiple layers along a height direction of the battery. The plurality of battery cells in the battery are arranged neatly in the multiple layers, which can improve the space utilization, thus improving the energy density of the battery.

In a second aspect, the present disclosure provides an electrical device, including the battery in the foregoing embodiment, wherein the battery is configured to provide electrical energy.

The foregoing description is only an overview of the technical solution of the present disclosure, in order to more clearly understand the technical means of the present disclosure, which can be implemented according to the contents of the specification. In order to make the above and other purposes, features, and advantages of the present disclosure more obvious and understandable, the specific embodiments of the present disclosure are described below.

### Brief Description of Drawings

Various other advantages and benefits will become clear to those of ordinary skill in the art by reading the detailed description of the preferred embodiment below. The drawings are only to illustrate preferred embodiments, and are not to be regarded as a limitation of the present disclosure. The same components are indicated by same reference numbers in all the drawings. In the drawings:
FIG. 1 shows a structure schematic diagram of a vehicle in some embodiments of the present disclosure;
FIG. 2 shows a disassembled structure schematic diagram of a battery in some embodiments of the present disclosure;
FIG. 3 shows a disassembled structure schematic diagram of a battery cell in some embodiments of the present disclosure;
FIG. 4 shows a partial structure schematic diagram at one view of a type of battery in some embodiments of the present disclosure;
FIG. 5 shows a partial structure schematic diagram at the other view of a type of battery in some embodiments of the present disclosure;
FIG. 6 shows a partial top view of a type of battery in some embodiments of the present disclosure;
FIG. 7 shows a partial top view of another type of battery in some embodiments of the present disclosure;
FIG. 8 shows a partial top view of another type of battery in some embodiments of the present disclosure;
FIG. 9 shows a partial top view of another type of battery in some embodiments of the present disclosure;
FIG. 10 shows a partial structure schematic diagram of another type of battery in some embodiments of the present disclosure;
FIG. 11 shows a partial top view of another type of battery in some embodiments of the present disclosure;
FIG. 12 shows a partial top view of another type of battery in some embodiments of the present disclosure;
FIG. 13 shows a top view of a type of battery in some embodiments of the present disclosure;
FIG. 14 shows a top view of another type of battery in some embodiments of the present disclosure; and
FIG. 15 shows a structure schematic diagram of another type of battery in some embodiments of the present disclosure.

The reference numbers of the drawings in the embodiments are as follows:
1000-vehicle;
100-battery; 200-controller; 300-motor;
10-box body; 11-first part; 12-second part;
20-battery cell; 21-end cover; 22-housing; 23-electrode assembly;
101-first direction; 102-second direction; 103-center line; 104-third direction; 105-fourth direction;
110-first battery cell; 111-first surface; 112-first pressure relief mechanism; 113-third surface; 114-first electrode terminal; 115-first middle line;
120-second battery cell; 121-second surface; 122-second pressure relief mechanism; 123-fourth surface; 124-second electrode terminal; 125-second middle line;
130-venting mechanism; 131-first pressure relief part; 132-second pressure relief part; 133-blocking member; and 134-heat exchange part.

### Detailed Description of Embodiments

The embodiments of the technical solutions of the present disclosure will be described below in detail in conjunction with the drawings. The following embodiments are intended only to more clearly illustrate the technical solutions of the present disclosure, which therefore are intended only as examples, and are not to limit the scope of protection of the present disclosure in this way.

Unless otherwise defined, all technical and scientific terms used in the text have the same meaning as commonly understood by those skilled in the art belonging to the present disclosure. The terms used in the text are used only for the purpose of describing specific embodiments, and are not intended to limit the present disclosure. The terms "include" and "comprise," and any variations thereof in the specification of the present disclosure and claims and the foregoing description of drawings, are intended to cover a non-exclusive inclusion.

In the description of the embodiments of the present disclosure, the technical terms "first", "second", etc., are only used to distinguish different objects, and are not to be understood as indicating or implying relative importance or implicitly specifying a quantity, particular order, or primary and secondary relationship of the technical features indicated. In the description of embodiments of the present disclosure, "plurality" means more than two, unless otherwise expressly and specifically limited.

Reference to "embodiment" in the text means that particular features, structures, or characteristics described in conjunction with the embodiments can be included in at least one embodiment of the present disclosure. The phrase occurring at various positions of the specification does not necessarily all refer to the same embodiment, nor is it a separate or alternative embodiment that is mutually exclusive with other embodiments. It is explicitly and implicitly understood by those skilled in the art that the embodiments described in the text can be combined with other embodiments.

The term "and/or" in description of the present disclosure is merely an associated relationship for describing associated objects, which indicates three relationships can exist, e.g., A and/or B can indicate three cases: A alone, both A and B, and B alone. Additionally, the character "/" in the text generally indicates an "or" relationship of forward and backward associated objects.

In the description of embodiments of the present disclosure, the term "plurality" refers to more than two (including two). Similarly, "the plurality of groups" refers to more than two groups (including two groups), and "the plurality of plates" refers to more than two plates (including two plates).

In the description of embodiments of the present disclosure, orientations or positional relationships indicated by the technical terms "center", "longitudinal", "transverse", "length", "width", "thickness", "up", "down", "front", "back", "left", "right", "vertical", "horizontal", "top", "bottom", "inside", "outside", "clockwise", "counterclockwise", "axial", "radial", "circumferential", etc., are the orientations or positional relationships based on that shown in the drawings, which are used only to facilitate the description of the present disclosure and simplify the description, and are not to indicate or imply that the device or element referred to must have particular orientations, or be constructed and operated in the particular orientations, and therefore cannot be understood as a limitation of the present disclosure.

In the description of the embodiments of the present disclosure, unless otherwise expressly regulated and limited, the technical terms "mount", "connect", "link", "fix" etc., are to be understood in a broad sense, e.g., it can be a fixed connection, a detachable connection, or an integral connection; it can be a mechanical connection, or an electrical connection; it can be a direct connection, or an indirect connection by an intermediate medium; and it can also be a communication inside two elements, or an interaction between the two elements. For those of ordinary skill in the art, the specific meaning of the above terms in the embodiments of the present disclosure can be understood on a case-by-case basis.

At present, from the perspective of the development of the market situation, the application of power battery is more and more extensive. The power battery is not only applied in energy storage power systems, such as hydro, fire, wind, and solar power station, etc., but also widely applied in electric transportation, such as an electric bicycle, electric motorcycle, electric car, etc., as well as in military equipment, aerospace, and other fields. With the continuous expansion of application fields of the power battery, the market demands also continuously expand.

The applicants found that during the use of the battery, when one of the battery cells in the battery undergoes thermal runaway, the adjacent battery cells are easily affected to the thermal runaway, which leads to further loss of control of the battery pack, thus resulting in accidents, such as fire, explosion, etc.

The applicants found through further research that the high-temperature emissions in the battery cell after thermal runaway will be sprayed from the pressure relief mechanism due to excessive pressure. When the pressure relief mechanisms of the adjacent battery cells are arranged oppositely, the emissions in the battery cell after thermal runaway are easily sprayed onto the pressure relief mechanism of the opposite battery cell by the pressure relief mechanism. The emissions easily affect an actuation threshold of the pressure relief mechanism of the opposite battery cell due to its characteristics such as high temperature, high pressure, etc., so as to lead to the thermal runaway of the opposite battery cell, thereby resulting in a thermal spread of the whole pack, so that the whole battery is in a dangerous state.

In order to alleviate the problem of thermal diffusion between battery cells, the inventors found that if the pressure relief mechanisms of the opposite battery cells are staggered, the thermal diffusion between battery cells can be alleviated or eliminated.

Based on the above considerations, in order to alleviate the problem of thermal diffusion between battery cells, the inventors designed a battery after deep research, the oppositely arranged first pressure relief mechanism of the first battery cell and second pressure relief mechanism of the second battery cell are staggered, so as to prevent the case that one of the two battery cells oppositely arranged releases pressure by a pressure relief mechanism after occurring thermal runaway so that high-temperature emissions are sprayed onto the other battery cell arranged oppositely, thus alleviating or eliminating the thermal spread of the whole pack caused by the thermal runaway of the battery cell, which reduces the risk of safety failure of the battery.

The battery referred in embodiments of the present disclosure refers to a single physical module including a plurality of battery cells to provide a higher voltage and capacity. The battery generally includes a battery box body for packaging the plurality of battery cells, wherein the battery box body can prevent liquid or other foreign objects from affecting charging or discharging of the battery cell.

The battery cells can include lithium-ion secondary battery cells, lithium-ion primary battery cells, lithium-sulfur battery cells, sodium-lithium-ion battery cells, sodium-ion battery cells, or magnesium-ion battery cells, etc., which are not limited thereto by the embodiments of the present disclosure. The battery cells can be in cylindrical, flat, rectangular, or other shapes, etc., which are not limited thereto by the embodiments of the present disclosure. The battery cells are generally classified into three types according to packaging method: cylindrical battery cell, square battery cell, and soft pack battery cell.

The battery cell includes electrode assembly and electrolyte, wherein the electrode assembly is consisted of a positive electrode plate, negative electrode plate, and isolation separator. The battery cell works primarily on metal ions moving between the positive electrode plate and negative electrode plate. The positive electrode plate includes a positive electrode collector and a positive electrode active substance layer, wherein the positive electrode active substance layer is coated on a surface of the positive electrode collector. The positive electrode collector not coated with the positive electrode active substance layer protrudes out of the positive electrode collector coated with the positive electrode active substance layer, and the positive electrode collector not coated with the positive electrode active substance layer is configured as a positive electrode lug. Taking the lithium-ion battery as an example, materials of the positive electrode collector can be aluminum, and the positive electrode active substance can be lithium cobaltate, lithium iron phosphate, ternary lithium, or lithium manganate, etc. The negative electrode plate includes a negative electrode collector and a negative electrode active substance layer, wherein the negative electrode active substance layer is coated on a surface of the negative electrode collector. The negative electrode collector not coated with the negative electrode active substance layer protrudes out of the negative electrode collector coated with the negative electrode active substance layer, and the negative electrode collector not coated with the negative electrode active substance layer is configured as a negative electrode lug. The material of the negative electrode collector can be copper, and the negative electrode active substance can be carbon or silicon, etc. In order to ensure that a heavy current is passed without fusing, a plurality of positive electrode lugs are provided and laminated together, and a plurality of negative electrode lugs are provided and laminated together. The material of the isolation separator can be PP (polypropylene) or PE (polyethylene), etc. Additionally, the electrode assembly can be a coiled structure or a laminated structure, which is not limited by the embodiments of the present disclosure.

The battery cell also includes a current collecting member, wherein the current collecting member is configured to electrically connect the electrode lugs and the electrode terminals of the battery cell, so as to deliver electrical energy from the electrode assembly to the electrode terminals, and then deliver to the outside of the battery cell via the electrode terminals. The plurality of battery cells are electrically connected to each other by an assembled component, so that a series connection or parallel connection or hybrid connection of the plurality of battery cells can be realized.

The battery further includes a sampling terminal and a battery management system, wherein the sampling terminal is connected to the assembled component for collecting information of the battery cells, such as voltage or temperature, etc. The sampling terminal transmits the collected information of the battery cells to the battery management system. When detecting that the information of the battery cells is out of a normal range, the battery management system will limit an output power of the battery to realize safety protection.

It can be understood that the electrical device applied to use the battery described in the embodiments of the present disclosure can be in multiple forms, e.g., a cell phone, portable device, laptop computer, battery vehicle, electric car, boat, spacecraft, electric toy, and power tool, etc. The spacecraft includes an airplane, rocket, space shuttle and spaceship, etc. The electric toy includes a stationary or movable electric toy, such as a game console, electric car toy, electric boat toy, and electric airplane toys, etc. The electric tool includes a metal cutting electric tool, grinding electric tool, assembling electric tool, and electric tool for a railroad, such as an electric drill, electric sander, electric wrench, electric screwdriver, electric hammer, electric drill, concrete vibrator, and electric planer, etc.

The battery cell and battery described in the embodiments of the present disclosure are not only limited to apply to the foregoing electrical devices, but also can be applied to all electrical devices using the battery cell and battery. For brevity of description, the following embodiments are illustrated by taking the electric vehicle as an example.

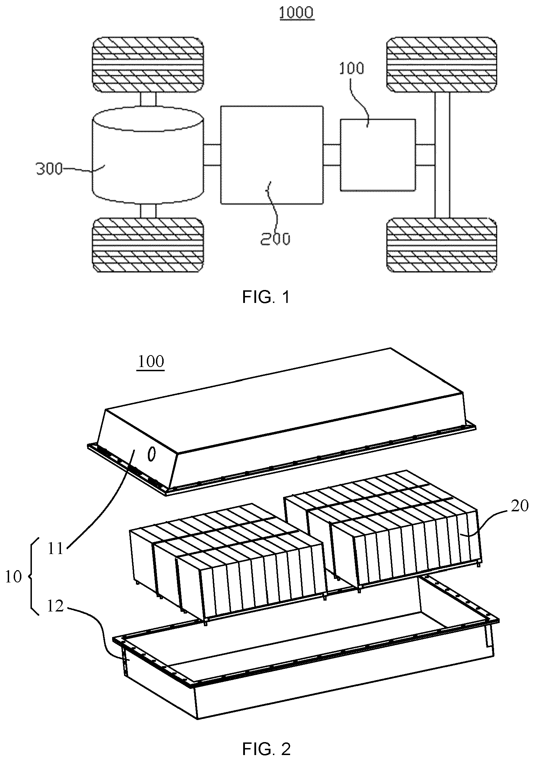

Referring to FIG. 1, FIG. 1 shows a structure schematic diagram of a vehicle provided by some embodiments of the present disclosure. The vehicle 1000 can be a fuel vehicle, gas vehicle or new energy vehicle, wherein the new energy vehicle can be a pure electric vehicle, hybrid electric vehicle or range extended vehicle, etc. The battery 100 is arranged inside the vehicle 1000, and the battery 100 can be arranged at the bottom or head or tail of the vehicle 1000. The battery 100 can be configured to supply power for the vehicle 1000, e.g., the battery 100 can be configured as an operating power supply of the vehicle 1000. The vehicle 1000 can further include a controller 200 and a motor 300, wherein the controller 200 is configured to control the battery 100 to supply power to the motor 300, e.g., configured to meet working demands of electricity of the vehicle 1000 when starting, navigating, and travelling.

In some embodiments of the present disclosure, the battery 100 can not only be configured as the operating power supply of the vehicle 1000, but can also be configured as the driving power supply of the vehicle 1000, which replaces or partially replaces fuel oil or natural gas to provide a driving force for the vehicle 1000.

Referring to FIG. 2, FIG. 2 shows an explosion diagram of the battery provided by some embodiments of the present disclosure. The battery 100 includes a box body 10 and a battery cell 20, wherein the battery cell 20 is accommodated within the box body 10. The box body 10 is configured to provide an accommodating space for the battery cell 20, and the box body 10 can be of multiple structures. In some embodiments, the box body 10 can include a first part 11 and a second part 12, wherein the first part 11 and the second part 12 cover each other, and the first part 11 and the second part 12 together define the accommodating space for accommodating the battery cell 20. The second part 12 can be of a hollow structure opened at one end, and the first part 11 can be of a platy structure. The first part 11 covers on the opening side of the second part 12, so that the first part 11 and the second part 12 together define the accommodating space. The first part 11 and the second part 12 can also be of hollow structures both opened at one side, wherein the opening side of the first part 11 covers on the opening side of the second part 12. Of course, the box body 10 formed by the first part 11 and the second part 12 can be of multiple shapes, such as a cylinder, a cuboid, etc.

In the battery 100, a plurality of battery cells 20 can be provided, wherein the plurality of battery cells 20 can be connected in series or in parallel or in hybrid, wherein the hybrid connection means that the plurality of battery cells 20 are both connected in series and in parallel. The plurality of battery cells 20 can be directly connected together in series or in parallel or in hybrid, and then the whole constituted by the plurality of battery cells 20 is accommodated in the box body 10. Of course, the battery 100 can also be that the plurality of battery cells 20 are firstly connected in series or in parallel or in hybrid to form a battery module, and the plurality of battery modules are then connected in series or in parallel or in hybrid to form a whole, and accommodated in the box body 10. The battery 100 can also include other structures, e.g., the battery 100 can also include an assembled component for realizing the electrical connection between the plurality of battery cells 20.

Each of the battery cells 20 can be a secondary battery or primary battery, and can also be a lithium-sulfur battery, sodium-ion battery, or magnesium-ion battery, but is not limited thereto. The battery cell 20 can be in cylindrical, flat, rectangular, or other shapes, etc.

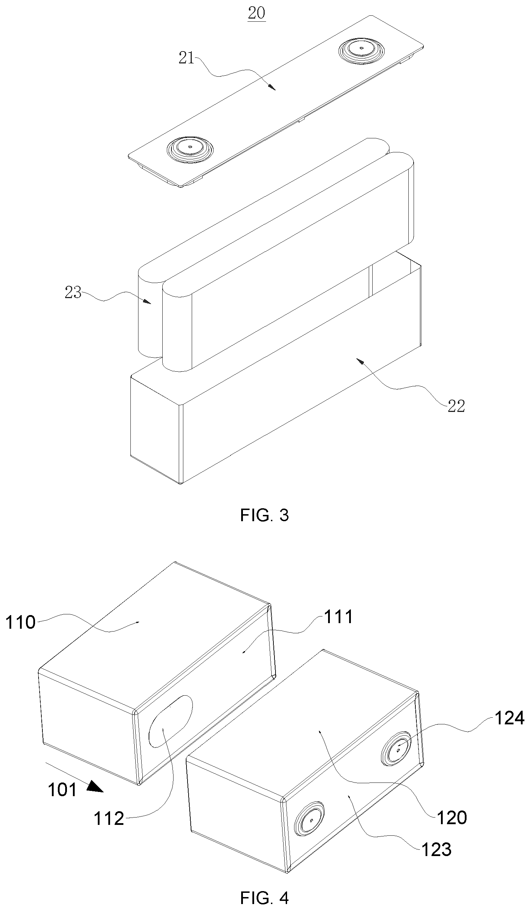

Referring to FIG. 3, FIG. 3 shows a disassembled structure schematic diagram of the battery cell provided by some embodiments of the present disclosure. The battery cell 20 is a smallest unit constituting the battery. As in FIG. 3, the battery cell 20 includes an end cover 21, a housing 22, an electrode assembly 23, and other functional components.

The end cover 21 is a component to cover on the opening of the housing 22, so as to isolate the internal environment of the battery cell 20 from the external environment. Unlimitedly, the shape of the end cover 21 can adapt to the shape of the housing 22 to cooperate with the housing 22. Optionally, the end cover 21 can be made of a material (e.g., an aluminum alloy) with a certain degree of hardness and strength. In this way, the end cover 21 is less likely to deform when squeezed and collided, so that the battery cell 20 can have a higher structure strength, and the safety performance can also be improved. The end cover 21 can be provided with functional components such as electrode terminals. The electrode terminals can be configured to electrically connect to the electrode assembly 23 to output or input the electrical energy of the battery cell 20. In some embodiments, the end cover 21 can also be provided with a pressure relief mechanism for releasing the internal pressure when the internal pressure or temperature of the battery cell 20 reaches a threshold. The end cover 21 can also be made of a variety of materials, e.g., copper, iron, aluminum, stainless steel, aluminum alloy, plastic, etc., which is not specially limited by the embodiments of the present disclosure. In some embodiments, an insulator can also be arranged inside the end cover 21, wherein the insulator can be configured to isolate electrically connection members in the housing 22 from the end cover 21 to reduce the risk of short circuit. Exemplarily, the insulator can be made of plastic, rubber, etc.

The housing 22 is a component cooperating with the end cover 21 to form the internal environment of the battery cell 20, wherein the internal environment formed can be configured to accommodate the electrode assembly 23, electrolyte, and other components. The housing 22 and the end covers 21 can be separate components, and an opening can be arranged on the housing 22. The end cover 21 is covered on the opening at the position of the opening to form the internal environment of the battery cell 20. Unlimitedly, it is also possible to integrate the end cover 21 and the housing 22. Specifically, a common connecting surface is formed by the end cover 21 and the housing 22 before the other components enter into the housing, and then the end cover 21 is covered on the housing 22 when it is necessary to package the internal of the housing 22. The housing 22 can be of multiple shapes and multiple sizes, such as rectangular, cylindrical, hexagonal prism, etc. Specifically, the shape of the housing 22 can be determined according to the specific shape and size of the electrode assembly 23. The housing 22 can be made of variety of materials, e.g., copper, iron, aluminum, stainless steel, aluminum alloy, plastic, etc., which is not specially limited by the embodiments of the present disclosure.

The electrode assembly 23 is the component in the battery cell 20 where the electrochemical reaction occurs. The housing 22 can include one or more electrode assemblies 23. The electrode assembly 23 is mainly formed by the positive electrode plates and negative electrode plates coiling or stacking with each other, and a separator is usually arranged between the positive electrode plate and the negative electrode plate. The parts of the positive electrode plate and the negative electrode plate with active substances constitute the main body part of the electrode assembly, and the parts of the positive electrode plate and the negative electrode plate without active substances separately constitute electrode lugs. The positive electrode lug and the negative electrode lug can be both located at one end of the main body part or separately located at two ends of the main body part. During the charging and discharging process of the battery, the positive electrode active substance and the negative electrode active substance react with the electrolyte, and the electrode lugs connect to the electrode terminals to form a current loop.

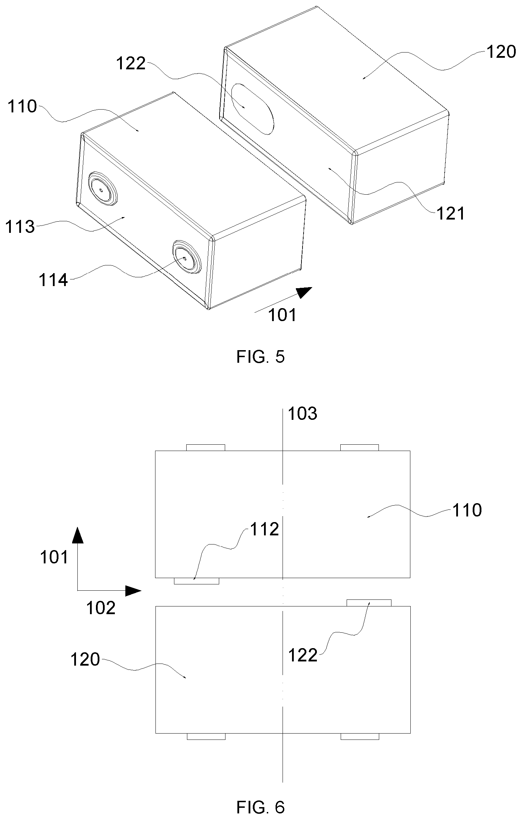

According to some embodiments of the present disclosure, referring to FIG. 4 to FIG. 6, FIG. 4 shows a partial structure schematic diagram at one view of a type of battery 100 in some embodiments of the present disclosure; FIG. 5 shows a partial structure schematic diagram at the other view of a type of battery 100 in some embodiments of the present disclosure; and FIG. 6 shows a partial top view of a type of battery 100 in some embodiments of the present disclosure.

The present disclosure provides a battery 100, including: a first battery cell 110 and a second battery cell 120, wherein the first battery cell 110 is provided with a first surface 111, and the first battery cell 110 has a first pressure relief mechanism 112 arranged on the first surface 111; and the second battery cell 120 is provided with a second surface 121, and the second battery cell 120 has a second pressure relief mechanism 122 arranged on the second surface 121. The first surface 111 and the second surface 121 are arranged opposite to each other along a first direction 101, and the first pressure relief mechanism 112 and the second pressure relief mechanism 122 are staggered along the first direction 101.

The structures of the first battery cell 110 and the second battery cell 120 can be the same or different.

The first surface 111 is an end surface of the first battery cell 110 provided with the first pressure relief mechanism 112, and the second surface 121 is an end surface of the second battery cell 120 provided with the second pressure relief mechanism 122.

The first pressure relief mechanism 112 is a structure of the first battery cell 110 to release pressure, and the second pressure relief mechanism 122 is a structure of the second battery cell 120 to release pressure. When the first battery cell 110 and/or the second battery cell 120 undergo the thermal runaway, the exothermic side reaction inside the battery cell leads to the heat accumulation. The rate of heat exchange of the battery cell towards outside is smaller than the rate of the heat accumulation, so that the temperature continues to rise. When the internal pressure reaches the threshold, the first pressure relief mechanism 112 and/or the second pressure relief mechanism 122 open to release pressure at this time.

Optionally, the first pressure relief mechanism 112 and/or the second pressure relief mechanism 122 are an explosion-proof valve.

The oppositely arranged first pressure relief mechanism 112 of the first battery cell 110 and second pressure relief mechanism 122 of the second battery cell 120 of the battery 100 of the present disclosure are staggered, so as to prevent the case that one of the two battery cells oppositely arranged releases pressure by the pressure relief mechanism after occurring thermal runaway so that high-temperature emissions are sprayed onto the other battery cell arranged oppositely, thus alleviating or eliminating the thermal spread of the whole pack caused by the thermal runaway of the battery cell, and reducing the risk of safety failure of the battery 100.

Optionally, the first battery cell 110 is provided with a third surface 113, wherein the third surface 113 is an end surface opposite to the first surface 111, and the first battery cell 110 has a first electrode terminal 114 arranged on the third surface 113.

Optionally, the second battery cell 120 is provided with a fourth surface 123, wherein the fourth surface 123 is an end surface opposite to the second surface 121, and the second battery cell 120 has a second electrode terminal 124 arranged on the fourth surface 123.

According to some embodiments of the present disclosure, optionally, referring to FIG. 4 to FIG. 6, the first surface 111 and the second surface 121 are arranged directly facing each other along the first direction 101.

The first surface 111 and the second surface 121 are arranged directly facing each other along the first direction 101, so that the first battery cell 110 and the second battery cell 120 can be neatly arranged in the box body of the battery 100, thereby improving a space utilization of the battery 100, and further improving the energy density of the battery 100.

Optionally, the first battery cell 110 and the second battery cell 120 have the same length along the second direction 102, and the two end surfaces of the first battery cell 110 along the second direction 102 are flush to the two end surfaces of the second battery cell 120 along the second direction 102, wherein the second direction 102 is perpendicular to the first direction 101.

When the first battery cell 110 and the second battery cell 120 have the same length along the second direction 102, all the first battery cells 110 and the second battery cells 120 can be arranged in the same method, which is not necessary to consider that the positional relationships between the first pressure relief mechanism 112 of the first battery cell 110 and the second pressure relief mechanism 122 of the second battery cell 120 of different positions will be affected by the different lengths of the first battery cell 110 and the second battery cell 120.

According to some embodiments of the present disclosure, optionally, referring to FIG. 6 to FIG. 7, FIG. 7 shows a partial top view of another type of battery 100 in some embodiments of the present disclosure. The first pressure relief mechanism 112 is located at the edge of the first surface 111, and the second pressure relief mechanism 122 is located at the middle or edge of the second surface 121.

The middle is the center of the surface and the area close to it.

The edge is the area of the surface other than the center.

When the first pressure relief mechanism 112 is located at the edge of the first surface 111, and the second pressure relief mechanism 122 is located at the middle or edge of the second surface 121, the first pressure relief mechanism 112 and the second pressure relief mechanism 122 can be staggered along the first direction 101, so as to prevent the emissions from the battery cell after thermal runaway from spraying onto the other battery cell arranged oppositely, thereby alleviating the thermal spread of the whole pack, and improving the safety performance of the battery 100.

As shown in FIG. 6, the first pressure relief mechanism 112 is located at the edge of the first surface 111, and the second pressure relief mechanism 122 is located at the edge of the second surface 121.

Optionally, in the embodiment as shown in FIG. 6, the structures of the first battery cell 110 and the second battery cell 120 can be the same, and it can only design one type of battery cell for whole battery 100, i.e., the pressure relief mechanisms are all located at the edge of the end surfaces. When arranging and installing the battery cells, the pressure relief mechanisms of the opposite two battery cells are staggered.

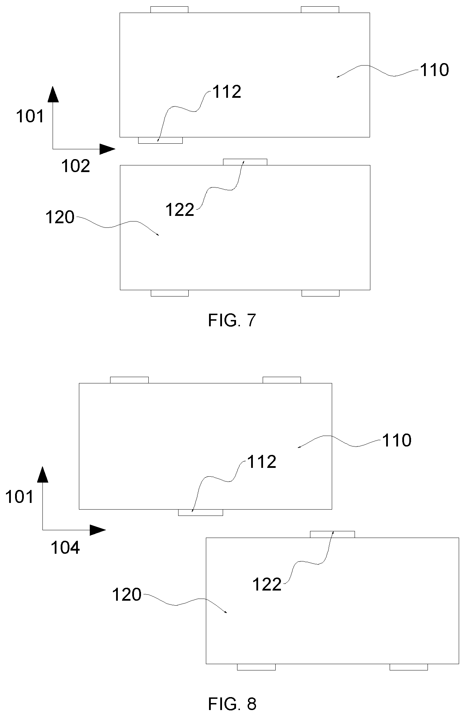

As shown in FIG. 7, the first pressure relief mechanism 112 is located at the edge of the first surface 111, and the second pressure relief mechanism 122 is located at the middle of the second surface 121.

Optionally, in the embodiment as shown in FIG. 7, the first battery cell 110 and the second battery cell 120 have different structures, and it can design at least two different structures of the battery cells for the whole battery 100.

According to some embodiments of the present disclosure, optionally, referring to FIG. 7, a center line 103 is formed by connecting a center of the first surface 111 to a center of the second surface 121. The first pressure relief mechanism 112 and the second pressure relief mechanism 122 are arranged at different sides of the center line 103 along the second direction 102, wherein the second direction 102 is perpendicular to the first direction 101.

The first pressure relief mechanism 112 and the second pressure relief mechanism 122 located at different sides of the center line 103 are staggered, so as to prevent the emissions from the battery cell after thermal runaway from spraying onto the other battery cell arranged oppositely, thereby alleviating the thermal spread of the whole pack, and improving the safety performance of the battery 100.

According to some embodiments of the present disclosure, optionally, referring to FIG. 8, FIG. 8 shows a partial top view of another type of battery 100 in some embodiments of the present disclosure. The first surface 111 and the second surface 121 are staggered along the first direction 101.

The first surface 111 and the second surface 121 are staggered along the first direction 101, so that the first pressure relief mechanism 112 and the second pressure relief mechanism 122 can be staggered along the first direction 101, so as to prevent the emissions from the battery cell after thermal runaway from spraying onto the other battery cell arranged oppositely, thereby alleviating the thermal spread of the whole pack, and improving the safety performance of the battery.

Optionally, the first battery cell 110 and the second battery cell 120 have the same length along the third direction 104, and one end surface of the first battery cell 110 along the third direction 104 faces directly the middle of the second battery cell 120, wherein the third direction 104 is perpendicular to the first direction 101.

When the first battery cell 110 and the second battery cell 120 have the same length along the third direction 104, all the first battery cells 110 and the second battery cells 120 can be arranged in the same method, which is not necessary to consider that the positional relationships between the first pressure relief mechanism 112 of the first battery cell 110 and the second pressure relief mechanism 122 of the second battery cell 120 of different positions will be affected by the different lengths of the first battery cell 110 and the second battery cell 120.

According to some embodiments of the present disclosure, optionally, referring to FIG. 8, the first pressure relief mechanism 112 and the second pressure relief mechanism 122 are separately located at the middle of the first surface 111 and second surface 121 along the third direction 104, wherein the third direction 104 is perpendicular to the first direction 101.

Since the first surface 111 and the second surface 121 are staggered along the first direction 101, the first pressure relief mechanism 112 and the second pressure relief mechanism 122 respectively located at the middle of the first surface 111 and the middle of the second surface 121 along the third direction 104 are staggered, so as to prevent the emissions from the battery cell after the thermal runaway from spraying onto the other battery cell arranged oppositely, thereby alleviating the thermal spread of the whole pack, and improving the safety performance of the battery 100. Moreover, during the process of installing the battery cells, even if certain wrong installation method exists, e.g., installation positions corresponding to the first battery cell 110 and the second battery cell 120 are wrong, the first pressure relief mechanism 112 and the second pressure relief mechanism 122 still can keep staggered.

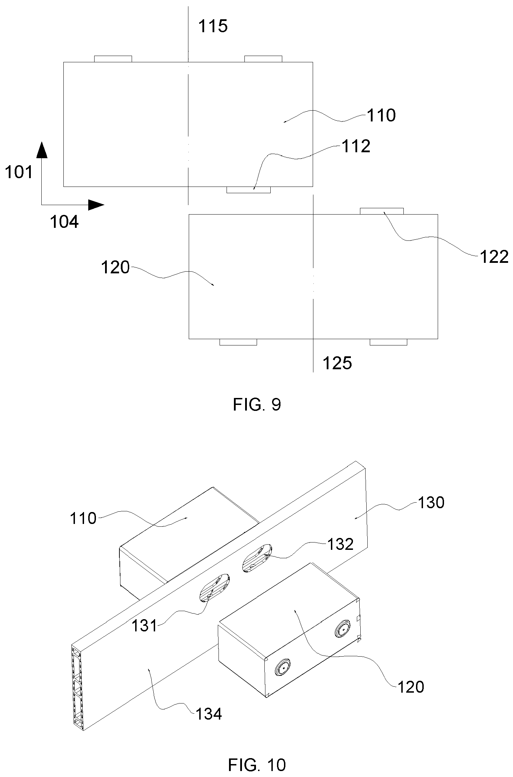

According to some embodiments of the present disclosure, optionally, referring to FIG. 9, FIG. 9 shows a partial top view of another type of battery 100 in some embodiments of the present disclosure. The first battery cell 110 includes a first middle line 115 parallel to the first direction 101, wherein the first middle line 115 passes through the center of the first surface 111; and the second battery cell 120 includes a second middle line 125 parallel to the first direction 101, wherein the second middle line 125 passes through the center of the second surface 121. Along the third direction 104, the first pressure relief mechanism 112 is located at one side of the first middle line 115 close to the second middle line 125, and the second pressure relief mechanism 122 is located at one side of the second middle line 125 away from the first middle line 115, wherein the third direction 104 is perpendicular to the first direction 101.

Since the first surface 111 and the second surface 121 are staggered along the first direction 101, the first pressure relief mechanism 112 located at one side of the first middle line 115 close to the second middle line 125 and the second pressure relief mechanism 122 located at one side of the second middle line 125 away from the first middle line 115 are staggered, so as to prevent the emissions from the battery cell after the thermal runaway from spraying onto the other battery cell arranged oppositely, thereby alleviating the thermal spread of the whole pack, and improving the safety performance of the battery.

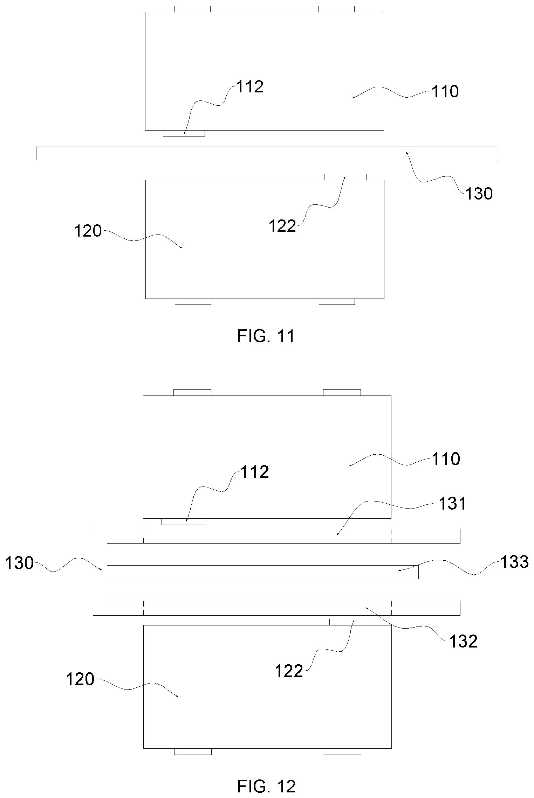

According to some embodiments of the present disclosure, optionally, referring to FIG. 10 and FIG. 11, FIG. 10 shows a partial structure schematic diagram of another type of battery 100 in some embodiments of the present disclosure; and FIG. 11 shows a partial top view of another type of battery 100 in some embodiments of the present disclosure. The battery 100 further includes a venting mechanism 130, wherein the venting mechanism 130 is arranged between the first battery cell 110 and the second battery cell 120, and the venting mechanism 130 has the first pressure relief part 131 and the second pressure relief part 132. The first pressure relief part 131 is configured to receive the emissions discharged by the first battery cell 110 via the first pressure relief mechanism 112, and the second pressure relief part 132 is configured to receive the emissions discharged by the second battery cell 120 via the second pressure relief mechanism 122.

The venting mechanism 130 can be a component receiving and guiding emissions of the battery cell.

The first pressure relief part 131 is a structure to release pressure cooperating with the first pressure relief mechanism 112.

The second pressure relief part 132 is a structure to release pressure cooperating with the second pressure relief mechanism 122.

The first pressure relief part 131 and the second pressure relief part 132 of the venting mechanism 130 both are configured to provide the pressure relief paths for the pressure relief mechanism of the battery cell, so that the battery cell can release pressure according to the preset path.

Optionally, along the first direction 101, the area, where the first pressure relief mechanism 112 is projected on the venting mechanism 130, located on the first pressure relief part 131 is a first pressure relief area, wherein the first pressure relief area/the area of the first pressure relief mechanism 112 *100% ≥ 50%.

When the first pressure relief area/the area of the first pressure relief mechanism 112 * 100% ≥ 50%, the preset pressure relief path of the first pressure relief mechanism can be ensured smoothly.

Optionally, the first pressure relief area/the area of the first pressure relief mechanism 112 * 100% ≥ 70%.

Optionally, along the first direction 101, the area, where the second pressure relief mechanism 122 is projected on the venting mechanism 130, located on the second pressure relief part 132 is a second pressure relief area, wherein the second pressure relief area/the area of the second pressure relief mechanism 122 *100% ≥ 50%.

When the second pressure relief area/the area of the second pressure relief mechanism 112 * 100% ≥ 50%, the preset pressure relief path of the second pressure relief mechanism can be ensured smoothly.

Optionally, the second pressure relief area/the area of the second pressure relief mechanism 122 * 100% ≥ 70%.

According to some embodiments of the present disclosure, optionally, referring to FIG. 10, the first pressure relief part 131 and the second pressure relief part 132 are staggered along the first direction 101.

When the first pressure relief part 131 and the second pressure relief part 132 are staggered along the first direction 101, it can prevent the emissions from the battery cell after thermal runaway from spraying onto the other battery cell arranged oppositely, thereby alleviating the thermal spread of the whole pack, and improving the safety performance of the battery 100.

According to some embodiments of the present disclosure, optionally, referring to FIG. 12, FIG. 12 shows a partial top view of another type of battery 100 in some embodiments of the present disclosure. The venting mechanism 130 further includes a blocking member 133, wherein the first pressure relief part 131 and the second pressure relief part 132 are arranged directly facing each other along the first direction 101, and the blocking member 133 is arranged between the first pressure relief part 131 and the second pressure relief part 132.

The blocking member 133 is a structure which is configured to prevent the high-temperature emissions discharged by the first pressure relief mechanism 112 or the second pressure relief mechanism 122 from reaching the opposite battery cell.

The blocking member 133 can prevent the high-temperature emissions of the battery cell after thermal runaway from spaying onto the other battery cell arranged oppositely, thus alleviating or eliminating the thermal spread of the whole pack caused by the thermal runaway of the battery cell, and reducing the risk of safety failure of the battery.

Optionally, according to some embodiments of the present disclosure, the first pressure relief part 131 is configured as at least one of a through hole or a weak structure, and/or the second pressure relief part 132 is configured as at least one of a through hole or a weak structure.

As an example, it can be that both the first pressure relief part 131 and the second pressure relief part 132 are configured as through holes; or both the first pressure relief part 131 and the second pressure relief part 132 are configured as weak structures; or the first pressure relief part 131 is configured as the through hole and the second pressure relief part 132 is configured as the weak structure.

When the first pressure relief part 131 and/or the second pressure relief part 132 are the through holes, the emissions of the battery cell can be released by the through hole; and when the first pressure relief part 131 and/or the second pressure relief part 132 are the weak structures, the emissions of the battery cell can be released by breaking through the weak structure when producing a preset pressure.

Optionally, according to some embodiments of the present disclosure, flow channels (not shown) are integrated into the venting mechanism 130, wherein the flow channels are configured to accommodate the thermal transfer medium.

The thermal transfer medium can absorb the heat of the high-temperature emissions discharged by the battery cells after thermal runaway, thereby reducing the temperature of the whole battery 100, and improving the safety of the battery 100.

It is noted that the flow channels are not communicated with the first pressure relief part 131 and the second pressure relief part 132, so as to prevent the thermal transfer medium in the flow channels from overflowing from the first pressure relief part 132 and the second pressure relief part 132.

According to some embodiments of the present disclosure, optionally, referring to FIG. 10, the venting mechanism 130 further includes a heat exchange part 134, wherein the flow channels are arranged in the heat exchange part 134.

The heat exchange part 134 is a structure that the flow channels are arranged inside the venting mechanism 130.

The heat exchange part 134 is configured to exchange heat with the high-temperature emissions discharged by battery cells after thermal runaway, thereby reducing the temperature of the whole battery 100, and improving the safety of the battery 100.

According to some embodiments of the present disclosure, optionally, a liquid inlet (not shown) and a liquid outlet (not shown) are separately arranged at two ends of the venting mechanism 130, wherein the liquid inlet and the liquid outlet are separately communicated with the flow channel.

The thermal transfer medium in the flow channels is the flowing thermal transfer medium, which can better balance the temperature of the whole battery 100.

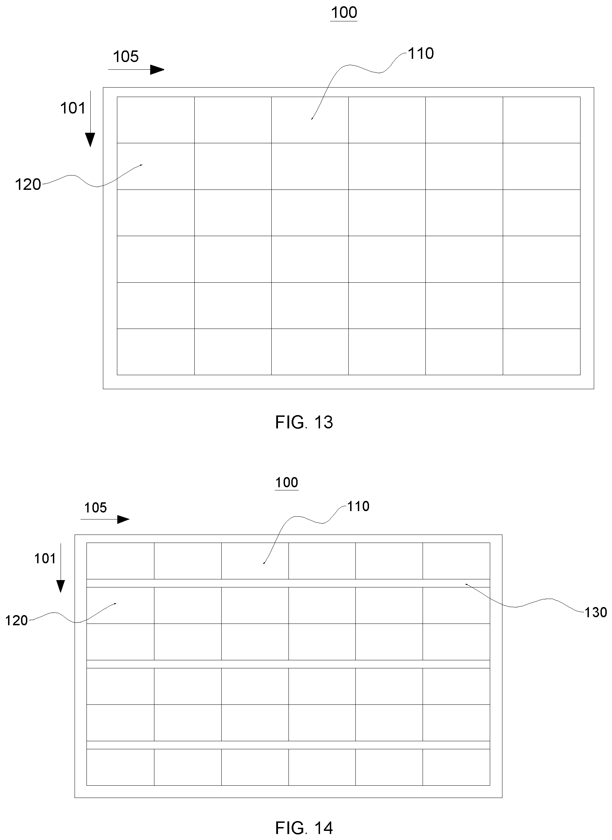

According to some embodiments of the present disclosure, optionally, referring to FIG. 13, FIG. 13 shows a top view of a type of battery 100 in some embodiments of the present disclosure The battery 100 includes a plurality of first battery cell groups and a plurality of second battery cell groups extending along a fourth direction 105, wherein the fourth direction 105 is perpendicular to the first direction 101. The first battery cell group includes the plurality of first battery cells 110 and the second battery cell group includes the plurality of second battery cells 120, and the plurality of first battery cell groups and the plurality of second battery cell groups are distributed alternately along the first direction 101.

The plurality of battery cells of the battery 100 are arranged neatly, which can ensure the whole structure strength of the battery 100 and improve the energy density of the battery 100.

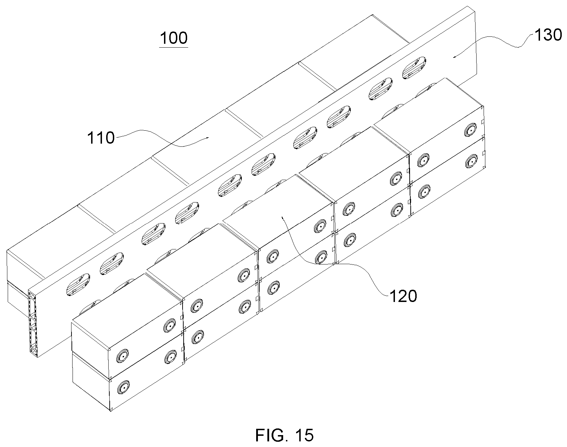

According to some embodiments of the present disclosure, optionally, referring to FIG. 14 and FIG. 15, FIG. 14 shows a top view of another type of battery 100 in some embodiments of the present disclosure; and FIG. 15 shows a structure schematic diagram of another type of battery 100 in some embodiments of the present disclosure. The battery 100 further includes the venting mechanism 130, wherein the venting mechanism 130 is arranged between a first battery cell group and at least one second battery cell group adjacent thereto, and the venting mechanism 130 has the first pressure relief part 131 and the second pressure relief part 132 separately corresponding to the first pressure relief mechanism 112 and the second pressure relief mechanism 122.

The first pressure relief part 131 and the second pressure relief part 132 both are configured to provide the pressure relief paths for the pressure relief mechanism of the battery cell, so that the battery cell can release pressure according to the preset path.

According to some embodiments of the present disclosure, optionally, referring to FIG. 15, the first battery cell group and the second battery cell group are distributed in multiple layers along the height direction of the battery 100.

The plurality of battery cells in the battery 100 are arranged neatly in multiple layers, which can improve the space utilization, thus improving the energy density of the battery 100.

According to some embodiments of the present disclosure, referring to FIG. 7, FIG. 10 to FIG. 11, and FIG. 14 to FIG. 15, the battery 100 includes the venting mechanism 130, and the plurality of first battery cell groups and the plurality of second battery cell groups extending along a fourth direction 105, wherein the fourth direction 105 is perpendicular to the first direction 101. The first battery cell group includes the plurality of first battery cells 110 and the second battery cell group includes the plurality of second battery cells 120, and the plurality of first battery cell groups and the plurality of second battery cell groups are distributed alternately along the first direction 101. The first battery cell group and the second battery cell group are distributed in multiple layers along the height direction of the battery 100, and the structures of the first battery cell 110 and the second battery cell 120 are the same. The first battery cell 110 is provided with the first surface 111, and the first battery cell 110 has the first pressure relief mechanism 112 arranged on the first surface 111. The second battery cell 120 is provided with the second surface 121, and the second battery cell 120 has the second pressure relief mechanism 122 arranged on the second surface 121. The first surface 111 and the second surface 121 are arranged directly facing each other along the first direction 101. The first pressure relief mechanism 112 is located at the edge of the first surface 111, and the second pressure relief mechanism 122 is located at the edge of the second surface 121, and the center line 103 formed by connecting the center of the first surface 111 to the center of the second surface 121 is along the second direction 102, wherein the second direction 102 is perpendicular to the first direction 101. The first pressure relief mechanism 112 and the second pressure relief mechanism 122 are arranged at different sides of the center line 103. The venting mechanism 130 is arranged between the first battery cell group and one of the second battery cell groups adjacent thereto. The venting mechanism 130 has the heat exchange part 134, and the first pressure relief part 131 and the second pressure relief part 132 separately corresponding to the first pressure relief mechanism 112 and the second pressure relief mechanism 122. The first pressure relief part 131 is configured to receive the emissions discharged by the first battery cell 110 via the first pressure relief mechanism 112, and the second pressure relief part 132 is configured to receive the emissions discharged by the second battery cell 120 via the second pressure relief mechanism 122. The first pressure relief part 131 and the second pressure relief part 132 are staggered along the first direction 101, and both the first pressure relief part 131 and the second pressure relief part 132 are configured as through holes. The venting mechanism 130 is integrated with the flow channels arranged in the heat exchange part 134, wherein the flow channels are configured to accommodate the thermal transfer medium. The liquid inlet (not shown) and the liquid outlet (not shown) are separately arranged at two ends of the venting mechanism 130, wherein the liquid inlet and the liquid outlet are separately communicated with the flow channels.

A final note is as follows. The above embodiments are only used to illustrate the technical solutions of the present disclosure, and are not intended to be a limitation thereof. Notwithstanding the detailed description of the present disclosure is made referring to the foregoing embodiments, those of ordinary skill in the art shall understood: who can still modify the technical solutions recorded in the foregoing embodiments, or replace partial or all of the technical features with equivalent ones; and these modifications or replacements do not separate the essence of the corresponding technical solutions from the scope of the technical solutions of the embodiments of the present disclosure, which shall be all covered in the scope of the claims and specifications of the present disclosure. Particularly, each of the technical features referred to in the various embodiments can be combined in any manner as long as without structure conflicts. The present disclosure is not limited by the particular embodiments disclosed in the text, but includes all technical solutions falling within the scope of the claims.

## Claims

1. A battery, wherein the battery comprises:
a first battery cell, wherein the first battery cell is provided with a first surface, and the first battery cell has a first pressure relief mechanism arranged on the first surface; and
a second battery cell, wherein the second battery cell is provided with a second surface, and the second battery cell has a second pressure relief mechanism arranged on the second surface, wherein
the first surface and the second surface are arranged opposite to each other along a first direction, and the first pressure relief mechanism and the second pressure relief mechanism are staggered along the first direction.

2. The battery according to claim 1, wherein the first surface and the second surface are arranged directly facing each other along the first direction.

3. The battery according to claim 2, wherein the first pressure relief mechanism is located at an edge of the first surface, and the second pressure relief mechanism is located at a middle or an edge of the second surface.

4. The battery according to claim 3, wherein a center line is formed by connecting a center of the first surface to a center of the second surface; and
the first pressure relief mechanism and the second pressure relief mechanism are arranged at different sides of the center line along a second direction, wherein the second direction is perpendicular to the first direction.

5. The battery according to claim 1, wherein the first surface and the second surface are staggered along the first direction.

6. The battery according to claim 5, wherein the first pressure relief mechanism and the second pressure relief mechanism are separately located at a middle of the first surface and a middle of the second surface along a third direction, wherein the third direction is perpendicular to the first direction.

7. The battery according to claim 5, wherein the first battery cell comprises a first middle line parallel to the first direction, and the first middle line passes through a center of the first surface; and the second battery cell comprises a second middle line parallel to the first direction, wherein the second middle line passes through a center of the second surface; and
along a third direction, the first pressure relief mechanism is located at one side of the first middle line close to the second middle line and the second pressure relief mechanism is located at one side of the second middle line away from the first middle line, wherein the third direction is perpendicular to the first direction.

8. The battery according to any one of claims 1 to 7, wherein the battery further comprises a venting mechanism, wherein the venting mechanism is arranged between the first battery cell and the second battery cell, and the venting mechanism has a first pressure relief part and a second pressure relief part, wherein the first pressure relief part is configured to receive emissions discharged by the first battery cell via the first pressure relief mechanism, and the second pressure relief part is configured to receive emissions discharged by the second battery cell via the second pressure relief mechanism.

9. The battery according to claim 8, wherein the first pressure relief part and the second pressure relief part are staggered along the first direction.

10. The battery according to claim 8, wherein the venting mechanism further comprises a blocking member, wherein the first pressure relief part and the second pressure relief part are arranged directly facing each other along the first direction, and the blocking member is arranged between the first pressure relief part and the second pressure relief part.

11. The battery according to any one of claims 8 to 10, wherein the first pressure relief part is configured as at least one of a through hole or a weak structure, and/or the second pressure relief part is configured as at least one of a through hole or a weak structure.

12. The battery according to any one of claims 8 to 11, wherein flow channels are integrated into the venting mechanism, and the flow channels are configured to accommodate a thermal transfer medium.

13. The battery according to claim 12, wherein the venting mechanism further comprises a heat exchange part, and the flow channels are arranged in the heat exchange part.

14. The battery according to claim 13, wherein a liquid inlet and a liquid outlet are separately arranged at two ends of the venting mechanism, and the liquid inlet and the liquid outlet are separately communicated with the flow channels.

15. The battery according to any one of claims 1 to 14, wherein the battery comprises a plurality of first battery cell groups and a plurality of second battery cell groups extending along a fourth direction, and the fourth direction is perpendicular to the first direction, wherein each of the first battery cell groups comprises a plurality of first battery cells and each of the second battery cell groups comprises a plurality of second battery cells, and the plurality of first battery cell groups and the plurality of second battery cell groups are distributed alternately along the first direction.

16. The battery according to claim 15, wherein the battery further comprises a venting mechanism, and the venting mechanism is arranged between a first battery cell group and at least one of the second battery cell groups adjacent thereto, wherein the venting mechanism has a first pressure relief part and a second pressure relief part separately corresponding to the first pressure relief mechanism and the second pressure relief mechanism.

17. The battery according to claim 15 or 16, wherein the first battery cell groups and the second battery cell groups are distributed in multiple layers along a height direction of the battery.

18. An electrical device, wherein the electrical device comprises the battery according to any one of claims 1 to 17, wherein the battery is configured to provide electrical energy.
